# EUROPEAN PATENT SPECIFICATION

(11) **EP 0 492 700 B1**
(45) Date of publication and mention of the grant of the patent: **04.06.1997**
(21) Application number: 91203280.2
(22) Date of filing: 11.12.1991
(51) Int. Cl.: G01N 27/414, G01N 27/12

(54) **Sensor of the diode type**
Sensor vom Diodentyp
Détecteur du type diode

(30) Priority: 13.12.1990 NL 9002750
(43) Date of publication of application: 01.07.1992
(73) Proprietor: INTERUNIVERSITAIR MICROELEKTRONICA CENTRUM VZW, 3030 Leuven-Heverlee (BE)
(72) Inventor: Roggen, Jean Joseph Marie, B-3560 Brummen (BE); Van Geloven, Peter Maria, B-3010 Kessel-Lo (BE); Vanhoof, Rita, B-3030 Leuven-Heverlee (BE); Huyberechts, Guido, B-1820 Melsbroek (BE)
(74) Representative: Land, Addick Adrianus Gosling

(56) References cited:
- EP-A- 0 203 561
- EP-A- 0 397 576
- DE-A- 2 535 500
- US-A- 2 975 362
- US-A- 4 001 756
- US-A- 4 058 368
- US-A- 4 103 227
- JAPANESE JOURNAL OF APPLIED PHYSICS. vol. 20, no. 10, October 1981, TOKYO JP pages 753 - 756; K. ITO: 'HYDROGEN DETECTOR UTILIZING METAL-SEMICONDUCTOR CONTACTS'
- IEEE TRANSACTIONS ON ELECTRON DEVICES. vol. ED-29, no. 1, January 1982, NEW YORK US pages 123 - 129; T.L. POTEAT ET AL.: 'TRANSITION METAL-GATE MOS GASEOUS DETECTORS'

## Description

There is a world-wide search under way for sensitive and rapidly responding sensors for sensing the presence of one or more gases (or vapours and the like). Such a sensor is described in the European patent EP-A2-299780.

The present invention has for its object to provide a new sensor, wherein a heterojunction is used for sensing to what extent one or more gases are present.

US-A-4,001,756 discloses a measuring cell for determining the oxygen concentration in a gas mixture, which cell is used for carburation control in an internal combustion engine. This measuring cell is used at temperatures of for instance 600°C or 700°C. It makes use of two elements made of semiconductive oxydic material which is doped so as to have n-type and p-type conductivity resp. and which elements are separated by a metal layer.

US-A-4,058,368 discloses a device for the detection of hydrogen comprising a semiconductor, a metal electrode and an insulator arranged between the conductor and the electrode. In this known device there is a junction between a semiconductor and a metal.

US patent US-A-2,975,362 discloses a semiconductor diode for gas detection, wherein the gas is delivered to the interior of the sensor, by conduits near a junction.

From the article "Hydrogen detector utilizing metal semiconductor contacts", by Kentaro Ito, Japanese Journal of Applied Physics, Vol. 20, No. 10, October 1981, Tokyo, pages 753 - 756, also a hydrogen sensitive diode including a junction between a metal and a semiconductor, is known.

The present invention provides a sensor of the diode type for sensing to what extent one or more gases are present, comprising:
- a semiconductive substrate of a first conductivity type with is provided with a contact electrode;
- a layer of semiconductive material of a second conductivity type; and
- one or more contact parts arranged on said layer;
characterized in that the material of said substrate is silicon or is a doped silicon, in that the material of said layer differs from the semiconductive material of said substrate, and shows a band gap different from the material of said substrate, and in that a heterojunction is present between said substrate and said layer.

First results have shown that such a sensor shows a degree of sensitivity adequate for practical purposes at temperatures in the vicinity of ambient temperature; while it can be included in an integrated circuit.

Further the present invention provides a method of manufacturing a sensor of the diode type for measuring to what extent one or more gases are present, comprising the following steps:
- providing a substrate of a semiconductive material of a first conductivity type with a layer of insulating material, said semiconductor material being (a doped) silicon;
- applying a layer of photoresist on the insulating material of said substrate;
- illuminating a portion of the photoresist using a mask;
- etching exposed parts of the insulating material;
- sputtering a layer of semiconductive material of the opposite conductivity and showing a different band gap than the material of the first conductivity type, onto the etched parts of the insulating layer;
- removing the remaining photoresist and layer portions;
- applying a second layer of photoresist over the formed structure;
- illuminating the structure including the second photoresist layer using a second mask;
- developing the illuminating resist layer;
- depositing one or more contacts parts on said layer; and
- arranging a contact electrode to the substrate.

Further advantages, features and details of the present invention will be elucidated in the light of a description of a preferred embodiment thereof, wherein reference is made to the annexed drawing, in which:
Fig. 1 shows a view in section of a preferred embodiment of a sensor according to the present invention;
fig. 2A-2G show schematic views in section of the successive method steps for manufacturing the preferred embodiment of fig. 1; and
fig. 3 shows a graph of a measured characteristic of the preferred embodiment of fig. 1.

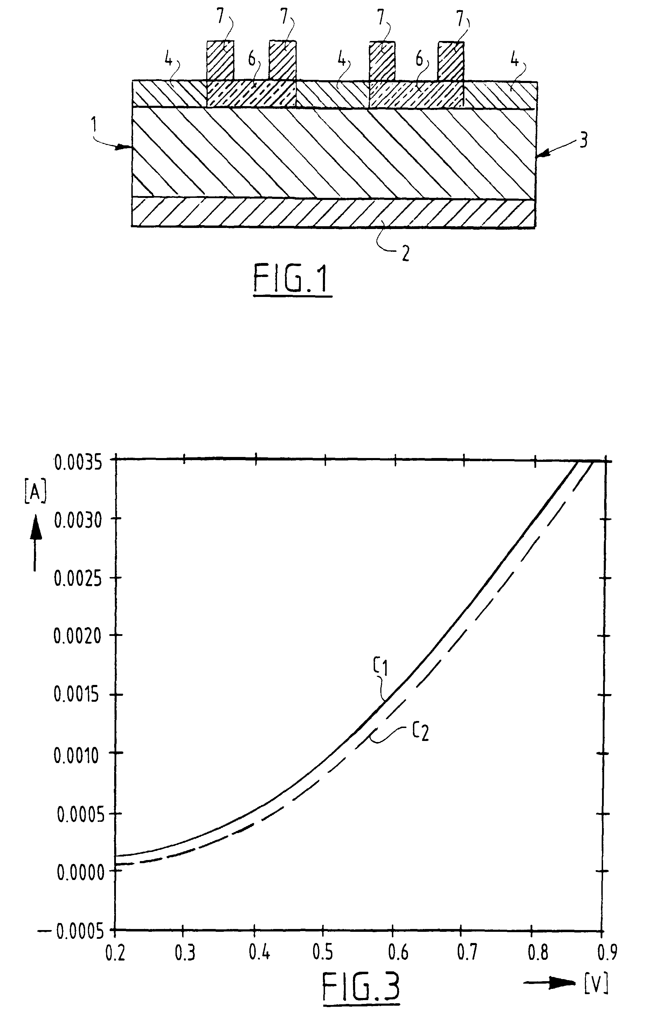

The preferred embodiment shown in fig. 1 of a sensor 1 according to the present invention comprises a contact electrode 2 preferably of aluminium (or another conducting material such as gold) which is arranged beneath a P-type Si-substrate 3 onto which, between regions 4 of insulating material such as SiO₂ (or another insulator such as Si₃N₄), are applied Sn regions 6 of SnO₂, above which are arranged electrodes or contact parts 7 of finger shape, preferably of Pd (Palladium) or another metal or conducting semiconductor material which in preference has catalytic properties and makes good contact with SnO₂.

The material SnO₂ is an N-type semiconductor with a large band gap (3.4 eV). The metal, preferably Pd, has a catalytic effect on the gas for sensing from which hydrogen atoms are released which penetrate into the SnO₂. If hydrogen atoms enter the SnO₂, conducting electrons are released therein, whereby conduction increases, or the contact potential between SnO₂ and the P-type substrate. This phenomenon will already occur at a comparatively low temperature such as room temperature (300K).

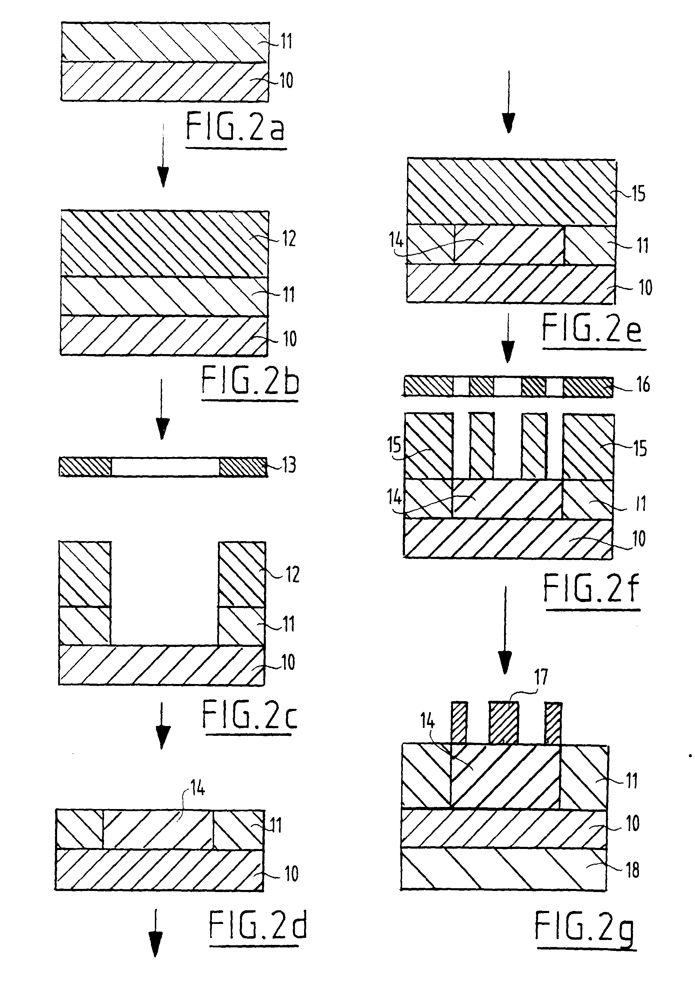

The sensor 1 is preferably manufactured in the following manner:
- to a P-type substrate 10 (fig. 2A) with a band gap of about 1.1 eV (resistivity 1-10 Ω.cm) provided with a layer of insulating material 11 is applied a layer of photoresist 12 (fig. 2B) whereafter using a mask 13 a portion of the photoresist is illuminated and exposed parts of the SiO are etched away (fig. 2C);
- a layer of tin (Sn) is then sputtered thereon. After removal of the remaining photoresist and tin by means of a lift-off process and thermal treatment in an oxygen-containing environment, there results an SnO₂ region 14 (fig. 2D);
- a layer of photoresist 15 (fig. 2E) is subsequently applied over the structure, whereafter, following illumination with a mask 16 (fig. 2F) and subsequent developing, the pattern is created for the vapour deposition of the finger-shaped Pd structure 17 (fig. 2G), wherein a contact part 18 of Al (aluminium) is arranged at the rear.

The measured voltage characteristic of the diode structure of fig. 1 and 2 in relation to the current is shown in fig. 3, in which the curve C₁ indicates the characteristic in air while the curve C₂ is measured in a hydrogen environment, both at 50°C.

It has been determined experimentally that the diode characteristic is caused by the heterojunction between P-type Si and the N-type SnO₂.

It has also been demonstrated experimentally that the measured values are sufficiently independent of the ambient temperature to perform sufficiently sensitive measurements on the concentration of the gases present.

The present invention is not limited to the embodiment described. Other possible materials with a large band gap are In₂O₃, InSb and ITO, wherein particularly ITO (indium tin-oxide) has the further advantage that it is transparent for visible light and displays a screening action for infrared radiation. Nor is the present invention limited to the described method for applying the SnO₂ regions:
- SnO₂ can be applied by means of CVD techniques (gas phase) or using sol-gel techniques, or by means of reactive sputtering or vapour deposition.
- instead of using the lift-off process, tin deposition can take place via vapour deposition or sputtering followed by thermal oxidation.

## Claims

1. Sensor of the diode type for sensing to what extent one or more gases are present, comprising:
- a semiconductive substrate (3) of a first conductivity type which is provided with a contact electrode (2);
- a layer (6) of semiconductive material of a second conductivity type; and
- one or more contact parts (7) arranged on said layer;
characterized in that the material of said substrate (3) is silicon or is a doped silicon, in that the material of said layer (6) differs from the semiconductive material of said substrate, and shows a band gap different from the material of said substrate, and in that a heterojunction is present between said substrate and said layer.

2. Sensor according to claim 1, wherein the band gap of the layer (6) is large, at least approximately 3.4 eV.

3. Sensor according to claim 1 or 2 provided with regions (4) of insulating material between which regions of said layer (6) are arranged.

4. Sensor according to claim 1, 2 or 3, wherein said semiconductive layer comprises material from the group of SnO₂, In₂O₃, and ITO (Indium Tin Oxyde).

5. Sensor according to any of claims 1 - 4, wherein the contact parts are formed from Pd.

6. A method of manufacturing a sensor of the diode type for measuring to what extent one or more gases are present, comprising the following steps:
- providing a substrate of a semiconductive material of a first conductivity type with a layer of insulating material, said semiconductor material being silicon or a doped silicon;
- applying a layer of photoresist on the insulating material of said substrate;
- illuminating a portion of the photoresist using a mask;
- etching exposed parts of the insulating material;
- sputtering a layer of semiconductive material of the opposite conductivity and showing a different band gap than the material of the first conductivity type, onto the etched parts of the insulating layer;
- removing the remaining photoresist and layer portions;
- applying a second layer of photoresist over the formed structure;
- illuminating the structure including the second photoresist layer using a second mask;
- developing the illuminating resist layer;
- depositing one or more contacts parts on said layer; and
- arranging a contact electrode to the substrate.

## Patentansprüche

1. Sensor vom Diodentyp zur Erfassung des Gehaltes eines oder mehrerer Gase, welcher umfaßt:
ein Halbleiter-Substrat (3) eines ersten Leitfähigkeitstyps, das mit einer Kontaktelektrode (2) versehen ist;
eine Schicht (6) aus Halbleiter-Material eines zweiten Leitfähigkeitstyps; und
ein oder mehrere Kontaktteile (7), die auf der Schicht angeordnet sind;
**dadurch gekennzeichnet,** daß das Material des Substrates (3) Silizium oder ein dotiertes Silizium ist, daß das Material der Schicht (6) von dem Halbleiter-Material des Substrates verschieden ist und eine Bandlücke aufweist, die von der des Materials des Substrats verschieden ist, und daß zwischen dem Substrat und der Schicht ein Heteroübergang vorhanden ist.

2. Sensor nach Anspruch 1, wobei die Bandlücke der Schicht (6) groß ist, mindestens etwa 3,4 eV.

3. Sensor nach Anspruch 1 oder 2, welcher mit Bereichen (4) eines Isolationsmaterials versehen ist, zwischen denen die Schicht (6) angeordnet ist.

4. Sensor nach Anspruch 1, 2 oder 3, wobei die Halbleiterschicht Material aus der Gruppe von SnO₂, In₂O₃ und ITO (Indium-Zinnoxid) umfaßt.

5. Sensor nach einem der Ansprüche 1 bis 4, wobei die Kontaktteile aus Pd bestehen.

6. Verfahren zur Herstellung eines Sensors vom Diodentyp zur Bestimmung des Gehaltes eines oder mehrerer Gase, welches die folgenden Schritte umfaßt:
Bereitstellen eines Substrates eines Halbleiter-Materials eines ersten Leitfähigkeitstyps mit einer Schicht aus isolierendem Material, wobei das Halbleitermaterial ein dotiertes Silizium oder Silizium ist;
Aufbringen einer Photoresist-Schicht auf dem Isolationsmaterial des Substrates;
Beleuchten eines Bereiches des Photoresists unter Verwendung einer Maske;
Ätzen belichteter Bereiche des Isolationsmaterials;
Sputtern einer Schicht aus Halbleiter-Material der entgegengesetzten Leitfähigkeit auf die geätzten Bereiche der Isolierungsschicht, das eine Bandlücke aufweist, die von der des Materials des ersten Leitfähigkeitstyps verschieden ist;
Entfernen des verbleibenden Photoresists und der verbleibenden Schichtbereiche;
Aufbringen einer zweiten Photoresist-Schicht über die gebildete Struktur;
Beleuchten der Struktur einschließlich der zweiten Photoresist-Schicht unter Verwendung einer zweiten Maske;
Entwickeln der beleuchteten Resist-Schicht;
Abscheiden eines oder mehrerer Kontaktteile auf der Schicht; und
Anordnen einer Kontaktelektrode auf dem Substrat.

## Revendications

1. Capteur du type à diode pour détecter la présence de un ou plusieurs gaz, comprenant:
- un substrat semi-conducteur (3) d'un premier type de conductivité qui est pourvu d'une électrode de contact (2);
- une couche (6) d'un matériau semi-conducteur d'un deuzième type de conductivité; et
- une ou plusieurs pièces de contact (7) disposées sur ladite couche;
caractérisé en ce que le matériau dudit substrat (3) est du silicium ou un silicium dopé, en ce que le matériau de ladite couche (6) diffère du matériau semi-conducteur dudit substrat, et présente une bande interdite différente du matériau dudit substrat, et en ce qu'une hétérojonction est présente entre ledit substrat et ladite couche.

2. Capteur selon la revendication 1, selon lequel la bande interdite de la couche (6) est importante, et est au moins égale à environ 3,4 eV.

3. Capteur selon la revendication 1 ou 2, pourvu de zones (4) d'un matériau isolant entre lesquelles, des zones de la couche (6) sont disposées.

4. Capteur selon la revendication 1, 2 ou 3, selon lequel ladite couche semi-conductrice comprend un matériau sélectionné dans le groupe comprenant du SnO₂, In₂O₃, et ITO (oxyde d'étain d'indium).

5. Capteur selon l'une quelconque des revendications 1 à 4, selon lequel les pièces de contact sont formées à partir de Pd.

6. Procédé de fabrication d'un capteur du type à diode pour mesurer la présence de un ou plusieurs gas, comprenant les étapes suivantes:
- fournir un substrat d'un matériau semi-conducteur d'un premier type de conductivité avec une couche de matériau isolant, ledit matériau de semi-conducteur étant un silicium ou un silicium (dopé);
- appliquer une couche de photorésist sur le matériau isolant dudit substrat;
- éclairer une partie du photorésist à l'aide d'un masque;
- graver les parties exposées du matériau isolant;
- former par pulvérisation cathodique une couche d'un matériau semi-conducteur de la conductivité opposée et présentant une bande interdite différente du matériau du type de première conductivité, sur les parties gravées de la couche isolante;
- retirer le photorésist et les parties de couches qui restent;
- appliquer une deuxième couche de photorésist sur la structure formée;
- éclairer la structure comprenant la deuxième couche de photorésist à l'aide d'un deuxième masque;
- développer la couche de résist d'éclairage;
- déposer une ou plusieurs pièces de contact sur ladite couche; et
- disposer une électrode de contact sur le substrat.
